# EUROPEAN PATENT APPLICATION

(11) **EP 1 304 897 A1**
(43) Date of publication of application: **23.04.2003**
(21) Application number: 01308956.0
(22) Date of filing: 22.10.2001
(51) Int. Cl.: H04Q 7/38

(54) **Methods and apparatus for providing data for enabling location of a mobile communications device**

(71) Applicant: Agilent Technologies, Inc. (a Delaware corporation), Palo Alto, CA 94303 (US)
(72) Inventor: Hurst, Michael, Edinburgh EH3 7RY (GB)
(74) Representative: Coker, David Graeme

(57) **Abstract**

A system for determining location of a mobile communications device obtains data for that purpose by monitoring signalling links in a communications network supporting the device. Data from signalling messages concerning propagation of signals between the device and the network are enhanced by the addition of data from other kinds of messages to facilitate use of the propagation data in determining the device's location.

## Description

### Technical Field

This invention relates to methods and apparatus for providing data for enabling location of a mobile communications device to be determined, and particularly though not exclusively for locating mobile telephones in cellular mobile telephone networks such as those conforming to the Global System for Mobile Communication (GSM) standard.

### Background Art

The rapid deployment and adoption of mobile communications facilities (such as mobile telephones, pagers and wireless e-mail devices) has resulted in a growing need for a capability for automatic identification of the geographic location of mobile telephone handsets and other mobile communications devices. Whereas the location of fixed line telephones is inherently determined by the structure of the network (each line terminates at a known, fixed physical place), the location of mobile telephones is inherently unknown. However, the physical location of a mobile telephone is an item of information with many potential uses of value to the telephone user. For example, knowing the location would enable systems to warn of nearby traffic congestion, re-link family members who have become temporarily separated, or provide information on existence of services and facilities in an unfamiliar environment (e.g. to a visitor in a foreign city).

Various proposals have been made on how to meet this requirement, typically involving modifications to the network or to mobile telephone handsets or to both. Examples are described in US patents 6 061 565 and 6 108 553. Many of these proposals require active interaction between the handset and the network over the wireless communications channel. Typically they also require exchange of dedicated messages over the signalling links (such as A links, A-bis links and SS7 links) used to co-ordinate operation of the various elements of the communications network, e.g. base transceiver stations (BTSs), base station controllers (BSCs) and mobile switching centres (MSCs). These wireless channel interactions and dedicated messages are additional to the activities required for supporting the communications which are the primary purpose of the network. If such techniques are employed in respect of a large number of mobile handsets it can be envisaged that the additional communications burden on the wireless and signalling channels will be excessive and will adversely affect the performance of the communications network.

### Disclosure of Invention

According to one aspect of this invention there is provided a method of providing data for enabling location of a mobile communications device to be determined, by monitoring messages traversing a signalling link for co-ordinating operation of the device with a communications network, comprising the steps of:
monitoring at least one signalling link carrying messages between two elements of the communications network;
selecting messages of a first type carrying reports of measurements relating to propagation of signals between the device and the network;
extracting reports of measurements from the messages of the first type, independently of operation of said two elements of the network;
selecting messages of a second type carrying data other than reports of such measurements;
extracting information from the messages of the second type; and
combining measurement reports extracted from the messages of the first type with the information extracted from the messages of the second type to provide data for enabling the location of the mobile communications device to be determined.

The messages of the second type may relate to at least one of identity of the mobile communications device, identity of a section of the communications network within which the device is located, and identity of sections of the network adjacent to the section within which the device is located. The reports of measurements extracted from the messages of the first type may relate to at least one of received signal strength, quality of signal reception and timing of occurrence of wireless signal bursts.

The messages of the second type may include: messages specifying wireless signal frequencies for which measurements of the first type are to be made; messages enabling recognition of the identity of the mobile communications device to be maintained across a handover; and messages enabling IMSI and MSISDN identifications of the mobile communications device to be correlated.

According to another aspect of the invention there is provided apparatus for providing data for enabling location of a mobile communications device to be determined, by monitoring messages traversing a signalling link for co-ordinating operation of the device with a communications network, comprising:
monitoring means for monitoring at least one signalling link carrying messages between two elements of the communications network;
first selection means for selecting messages of a first type carrying reports of measurements relating to propagation of signals between the device and the network;
first extraction means for extracting reports of measurements from the messages of the first type, independently of operation of said two elements of the network;
second selection means selecting messages of a second type carrying data other than reports of such measurements;
second extraction means extracting information from the messages of the second type; and
combining means for combining measurement reports extracted from the messages of the first type with the information extracted from the messages of the second type to provide data for enabling the location of the mobile communications device to be determined.

### Brief Description of Drawings

A method and apparatus in accordance with this invention, for locating mobile communications devices such as mobile phone handsets, will now be described, by way of example, with reference to the accompanying drawings, in which:
- Figure 1: is a schematic illustration of part of a mobile telephone network incorporating equipment for implementing the invention;
- Figure 2: is a block schematic diagram of a probe forming part of equipment for implementing the invention; and
- Figure 3: is a data flow block diagram of software used in equipment for implementing the invention.

### Best Mode for Carrying Out the Invention, & Industrial Applicability

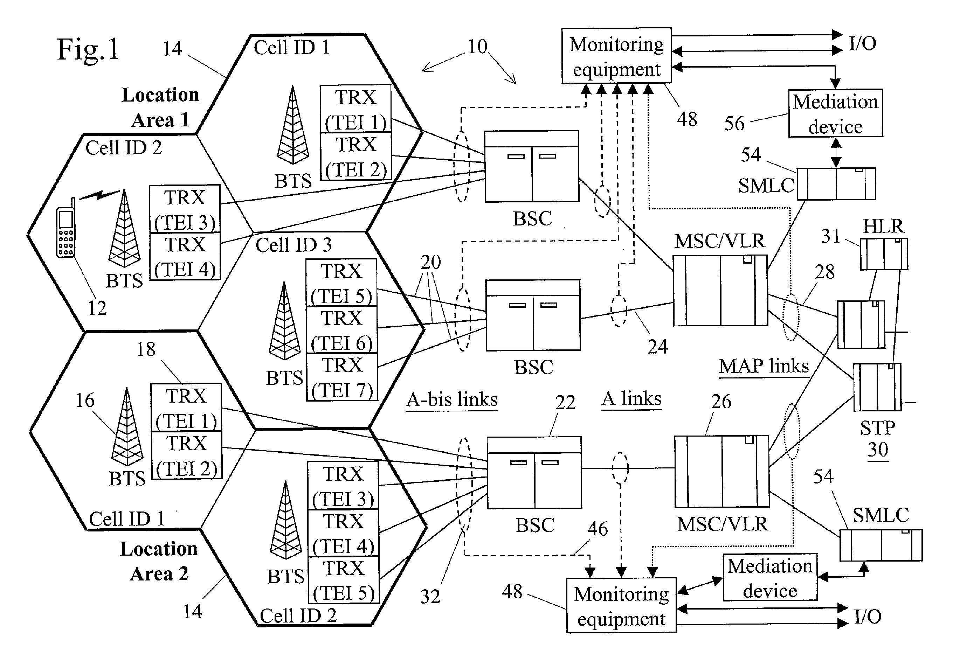

Figure 1 shows major elements of a GSM cellular mobile telephone network 10, with additional equipment to facilitate the identification of the location of mobile phone handsets ("mobile stations", MS) 12 operating in the network. For the sake of clarity the telecommunications transmission lines for carrying user voice and data signals are omitted; only the signalling links for control of operation of the network, which are of interest in the context of this invention, are shown.

Referring to Figure 1, the coverage area of the network 10 is organised into location areas, such as Location Area 1 (LA1) and Location Area 2 (LA2). Each location area typically contains several cells 14, which are the basic unit of division of the coverage area for the purposes of radio spectrum management and are shown in Figure 1 as conventional idealised hexagons. The cells 14 are grouped into location areas to facilitate routing of an incoming call to the handset 12. Each cell 14 contains a BTS 16 which houses one or more radio transceivers (TRXs) 18 for communicating with handsets over the radio "air interface", and these transceivers are connected via "A-bis" signalling links 20 to a BSC 22 which may control transceivers in more than one BTS 16. The sub-system comprising a BSC 22 and its associated BTSs 16 is sometimes referred to as a base station system (BSS). The BSCs 22 are themselves co-ordinated via "A" signalling links 24 by MSCs 26, which may control BSCs 22 in more than one location area. The MSCs typically contain Visitor Location Registers (VLRs) for co-ordinating services to MSs 12, and have links 28 carrying Mobile Application Protocol (MAP) messages from the VLRs to Signal Transfer Points (STPs) 30 providing signalling connections to other parts of the network, and in particular to a Home Location Register (HLR) 31 for storing subscriber information.

To facilitate referencing in messages traversing the links 20, 24 and 28 of specific network elements such as the handset 12, transceivers 18, BTSs 16 and BSCs 22, various identifiers are assigned to these elements. A mobile handset has a permanent International Mobile Subscriber Identity (IMSI) and a corresponding Temporary Mobile Subscriber Identity (TMSI) which is allocated by the relevant MSC/VLR when a handset enters a location area and which is used instead of the IMSI in most communications over the air interface for security reasons. Each location area has a unique identity code (LA1), which is supplied with the TMSI of a handset operating within that area to make the LAI/TMSI combination globally unique. Each cell 14 has a respective Cell ID which is unique within a location area but not necessarily between such areas; combining a Cell ID with the LAI of the location area in which it is situated provides a Cell Global Identification (CGI) which is entirely unique. The TRXs 18 have respective Terminal Endpoint Identifiers (TEIs) which are unique on an individual A-bis link 20 but not necessarily at a BSC 22.

Another identity which is used in the network is the Base Station Identity Code (BSIC), which is typically allocated to a group of cells adjacent to one another to facilitate radio spectrum planning, by enabling handsets to distinguish different cells which are broadcasting basic control information (the Broadcast Control Channel, BCCH) on the same "beacon" frequency. The BSIC comprises a network "colour code" (NCC) and a base station colour code (BCC).

Figure 1 shows examples of how these various codes may be assigned to the location areas, cells and TRXs, although the codes shown are chosen to emphasise the concepts of the code allocations and may not conform to the code formats specified in the GSM standards.

During operation of the network, various operations are performed to control and measure the radio transmissions over the air interface between the MS 12 and the TRX 18. In particular, the MS 12 controls the timing of transmissions to the TRX 18 in accordance with a Timing Advance (TA) value supplied by the BTS 16 containing that TRX, to compensate for radio propagation delays between the MS and the BTS. The current TA value is also communicated to the BSC 22 via the A-bis link 20. The BTS and the MS each continually measure the strength and the quality (e.g. bit error rate) of the signal received over the air interface, and the MS also measures the strength of signals being received (on the respective beacon frequencies) from BTSs in neighbouring cells. The measurements made by the MS 12 are transmitted to the TRX, and the BTS reports them with its own measurements over the A-bis link 20 to the associated BSC for use in managing handovers of communications between cells in response to movement of the MS 12.

In the present example of the invention, data which can be used to determine the location of the MS 12 are obtained by a system for monitoring signalling messages traversing the A-bis links 20, the A links 24 and if necessary the MAP links 28. These data basically comprise the MS TA and receiver level measurements made by the MS on its current serving cell down-link channel and on the beacon frequency of neighbouring cells, as described above. To facilitate the determination of the MS location, in particular without imposing additional message traffic burden on the signalling network, these data are enriched with additional details. This data enrichment includes identifying the MS by IMSI, identifying the CGI of the current MS serving cell, and identifying CGI of the neighbour cells associated with the receive level measurement reports. To this end the data from a number of signalling messages are correlated as described below, and the resultant information is combined with the basic or raw measurement reports to yield "enriched" measurement reports. The monitoring system also requires reference and configuration information about the network it is monitoring. This configuration information is conveniently derived by monitoring and correlating additional signalling messages, as also described herein.

The monitoring system includes probes 32 for passively monitoring signalling messages traversing the A-bis and A links 20 and 24, and possibly the MAP links 28, as described below. The monitoring is passive in the sense that the operation of the links 20, 24 and 28 is undisturbed by the presence of the monitoring system, which simply makes copies of some or all of the message packets it observes traversing the links. The probes 32 are coupled to the links in such a way that the operating characteristics of the links 20, 24 and 28 are not significantly altered. In the case of an optical link, for example, the coupling may comprise an optical power splitter and for an electrical link it may be a bridging isolator.

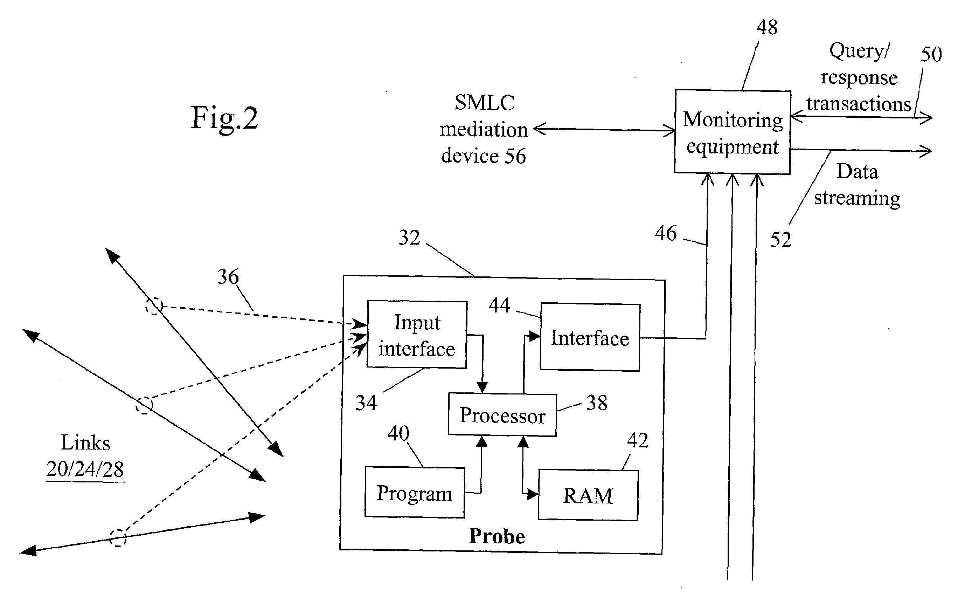

As shown in Figure 2, each probe 32 has an input interface 34 which receives and conditions the signal received over a line 36 from the coupling to the relevant link 20, 24 or 28 and which supplies the signal to a processor/CPU 38 operating under the control of software program instructions in a program store 40 and using a random access store 42. The processor 38 extracts messages from the signal and performs some initial processing (e.g. error checking and preliminary decoding). The messages are subsequently forwarded via an interface 44 and a communications bus 46 to monitoring equipment 48 for any necessary additional decoding and for further analysis as described below. This monitoring equipment provides responses to specific queries on current or historic measurement data via a input/output port 50, and a real-time measurement data stream relating to active mobile stations on an output port 52. The probes 32 may comprise for example components of *acceSS7* system equipment available from Agilent Technologies for monitoring messages traversing SS7 signalling networks.

The nature of the lines 36 and 46 depends on the configuration of the mobile telephone network 10. If the BSCs 22 and MSCs 26 are located at the same physical site then the A-bis, A and MAP links are all accessible there and direct lines 36 to the probes are possible. If the BSCs and MSCs are at separate sites the message traffic traversing either the A-bis links or the MAP links may need to be copied (back-hauled) as necessary to probes placed at the sites of the MSCs or BSCs respectively. Alternatively the probes 32 may be placed at the separate MSC and BSC sites, and the communications line 46 may comprise a local area or TCP/IP network to forward the data extracted to the monitoring equipment 48.

The monitoring system typically monitors one or more MSC areas and all BSSs therein. One MSC area could be monitored by more than one monitoring system, although in this case multiple monitoring of MAP links, as described below, may be necessary. Where multiple monitoring systems are deployed to monitor a single MSC area, the monitoring should preferably be arranged such that BSCs in the same location area are monitored by the same monitoring system. Preferably all BTSs in a BSS (controlled by the same BSC) should be monitored by one monitoring system.

The monitoring equipment 48 may be connected to a Serving Mobile Location Centre 54 (SMLC, described in ETSI specification 101 724/3GPP TS 03.71) for integration into the GSM Location Services (LCS) architecture - see Figure 1. A mediation device 56 may be required between the monitoring equipment 48 and the SMLC 54 to turn enriched measurement data into geodetic location data, depending on the design and capabilities of the particular SMLC. This mediation device could be incorporated into the monitoring equipment 48 itself.

The enriched measurement data can be used to determine the location of the MS 12 in a variety of different ways:
1) Using serving Cell ID. The location calculation software translates the Cell ID and LAI to a geographical co-ordinate system (such as WGS 84 or Lambert) by reference to a database containing the Cell ID, LAI and the geographical co-ordinates and size of the cell. Thus the location of the MS 12 can be determined to be within an area (approximately circular for a cell served by an omni-directional antenna) of that size at those co-ordinates. For sectored cells the area is a sector of a circle and the database also contains the angular extent of each sector as seen from the BTS. The specific geographical co-ordinates may correspond to the position of the BTS itself, a point of interest or the centre of the cell.
2) Using Cell ID and Timing Advance. The Cell ID is used as described for 1) above. TA gives the distance of the MS 12 from the serving cell BTS in symbol periods, each about 3.692 microseconds in duration which corresponds to about 550 metres. Thus combining a TA of *n* symbol periods with location data derived from Cell ID defines the location of the MS 12 to be in a ring of width 550m and radius *n**550m around the BTS. For a sectored cell the area defined is an arc instead of a ring. For this use of the enriched measurement data no extra reference data is required over the Cell ID method described in 1), but the geographical co-ordinates in the database should be those of the BTS.
3) Using Cell ID, TA and receive level. The neighbouring cell receive level measurements can be used to improve location accuracy further (e.g. reduce the area of the position circle, sector, ring or arc). At least two methods of using neighbouring cell measurements are possible: triangulation, and RF "contour mapping" or "RF fingerprinting". The former uses the relative received signal strengths from neighbouring cells to triangulate a likely position of the MS. This method may not be satisfactory by itself because the received power levels at an MS may be influenced by many features such as terrain, proximity of buildings and other structures, location inside or outside a building, type of handset and orientation of the handset. However, when combined with Cell ID and TA as described in 2) it can give an improvement over that technique alone, especially for omni-directional cells. RF fingerprinting involves dividing the geographical region into polygons ("geographical pixels") of between 20m and 500m across and measuring the RF levels from serving cell and neighbour cells in each of these pixels or polygons. To compensate for variations between handsets, differences in level between received cell signals, rather than absolute received power levels, are usually calculated and stored. Given this RF map reference data, the receive level measurements in a measurement report are processed to derive differences among them, and the observed pattern of differences is matched against the reference RF map. The MS 12 is determined to be located within the pixel/polygon with the best matching set of receive level differences. When combined with Cell ID and TA this can significantly improve the location resolution compared to cell ID and TA alone.

In the case of a GSM network the relevant specifications require that the MS 12 send measurement reports on the received level and quality of the signal from its serving cell and the level from the other cells it can receive, whenever the MS has a standalone dedicated control channel (SDCCH) or traffic channel (TCH) active. These measurements are sent every 480mS approximately, over a slow associated control channel (SACCH) linked with the active SDCCH or TCH. As noted above, the measurement reports are extracted by monitoring the A-bis interface between the BTS and BSC, to collect raw radio resource measurements for each active MS in the part of the network being monitored and thereby enable determination of the location of each such MS without imposing an additional processing burden on the network infrastructure.

An active MS is one that is:
(a) performing a Location Update;
(b) engaged in set-up for a Mobile Originated or Mobile Terminated call;
(c) engaged in an active Mobile Originated or Mobile Terminated call;
(d) allocated an SDCCH for any other reason - e.g. the MS is sending or receiving a Short Message Service (SMS) message.
An idle MS (without an allocated channel) does not communicate with the network so its position cannot be determined using the present invention while the idle MS moves between cells within a single Location Area. However, when an idle MS moves into a different Location Area a Location Update is triggered. There are also periodic Location Updates every few hours depending on the network operator's preference. The occurrence of such a Location Update enables the position of the mobile at that time to be determined anew.

The raw radio resource measurements comprise L1 and L3 information encapsulated in A-bis MEASUREMENT RESULT messages. The L1 information contains the MS power and time advance measurements; the L3 information contains a complete Direct Transfer Application Part (DTAP) MEASUREMENT REPORT message. If one of the regular MEASUREMENT RESULT messages observed by the monitoring equipment 48 on the A-bis links does not contain the L1 and L3 information, e.g. because no report has been received from the MS, the monitoring equipment 48 ignores that MEASUREMENT RESULT message.

If an optional MS Timing Offset parameter is present in the A-bis MEASUREMENT RESULT message, the reported Timing Advance value is adjusted in accordance with the MS timing offset value before use for determining the location of the MS. The MS Timing Offset is effectively the error in the current Timing Advance value, and is of most use for location determination when the round trip distance between the MS and BTS is more than 63 symbol periods - the maximum value of Timing Advance.

For the following channel reassignments or handovers the monitoring system is arranged to track automatically the MS identity (IMSI, TMSI, MSISDN as required) from the old channel to the new channel:
(a) Between different TRXs in the same BTS;
(b) Between different BTSs controlled by the same BSC;
(c) Between different BSCs controlled by the same MSC;
(d) Between different MSCs.

Received signal level measurements are excluded from use for a short period following these two events:
(a) Initial Channel activation;
(b) Successful or unsuccessful handover.
This is because after these events the received level measurements reported by an MS may not indicate the correct neighbouring cell identities. Neighbouring cells in the measurement report message sent over the air and A-bis interfaces are identified by an index into the MS's current list of absolute radio frequency channel numbers (ARFCNs) of neighbouring cell beacon frequencies, and not by the ARFCNs themselves. When a MS is idle this list is provided via the BCCH of the MS's "camped on" cell; this list is called the BCCH Allocation (BA(BCCH)). When a MS becomes active the list is downloaded to the MS via the SACCH; this list is called the BA(SACCH), and its contents may be different from the contents of the BA(BCCH). For example, a MS may be allowed to handover to an umbrella cell when active, but not camp onto an umbrella cell when idle, in which case the umbrella cell beacon frequency would be included in the BA(SACCH) but not in the BA(BCCH). The indices in the first one or two measurement result messages which are sent after an MS becomes active may still refer to the BA(BCCH) list, not the BA(SACCH) list. Accordingly the neighbouring cells cannot be reliably identified until the BA(SACCH) has been downloaded. The BA(SACCH) download is performed autonomously by the BTS and its occurrence is not normally detectable by monitoring the A-bis interface, so the duration of the period of uncertainty must be estimated. A similar situation exists with handovers, where the timing of replacement of the BA(SACCH) for the old cell with that for the new cell is not known exactly.

As noted above, each active MS generates a raw measurement report every 480 ms approximately. This rate may be unnecessarily high for efficient mobile location determination. Further, measurement reports, especially RF level measurements, may contain significant jitter and may benefit from averaging. Therefore, for efficiency and accuracy the monitoring system has a mechanism for aggregating measurement reports to produce aggregated enriched measurement reports (AMRs). However it may be desirable to avoid undue delay in providing measurement reports immediately after an MS becomes active, which could arise from the time needed for aggregation. Therefore the first few (for example, one or two) enriched measurement reports are provided directly by the monitoring system without aggregation following activation, to facilitate initial, approximate determination of the location of the MS 12.

After this initial number of measurement reports has been provided, subsequent measurement reports are subject to aggregation. A first aggregation period, for example of the order of ten seconds, starts immediately after generation of the final one of the initial number of measurement reports. All measurement reports received during this first aggregation period are combined as detailed below and an AMR is provided at the end of the aggregation period. The second aggregation period then starts immediately, and so on until any of the conditions described below is detected. If desired in particular circumstances no aggregation is performed and all enriched measurement reports are provided immediately on generation.

Over an aggregation period an average is calculated for the following measurements:
(a) MS TA. Examination of A-bis protocol traces has shown that TA values can be subject to random variations, for example caused by RF multi-path effects. It is desirable to smooth out these variations and improve accuracy by doing averaging.
(b) MS receive level for each neighbouring cell. The list of neighbouring cells may change during the aggregation period, so the actual number of measurement reports received for each neighbouring cell during the aggregation period should be used in calculating the running average for that cell.
(c) MS receive level of the current serving cell.
(d) TRX receive level (of the signal from the MS).
(e) TRX transmission power control.
(f) MS transmission power level.

If any of the following events occur during an aggregation period, that aggregation period is terminated and an AMR is produced:
(a) Final rf channel release.
(b) Cell change following a successful handover.

However, a pending AMR is not dispatched upon occurrence of a channel reassignment within the same TRX - e.g. transfer from SDCCH to TCH at call set up. The raw measurement results from the old channel and new channel ought to be more or less the same.

Alternatives to the aggregation procedure described above can be envisaged. One possibility would be to sample the measurement reports and use for example one in ten. However this would not provide any smoothing of the measurements, especially of the receive level measurements that can be subject to considerable variation. On the other hand the aggregation method described above may give less satisfactory results with a rapidly moving MS - e.g. in a vehicle. To cope with this situation a smoothing approach using Kalman filtering may be preferable, as described in "Location Tracking of Mobiles in Cellular Radio Networks" by Martin Hellebrandt and Rudolf Mathar, *IEEE Transactions in Vehicular Technology,* Vol. 48, No. 5, September 1999.

Although the TA and receive level measurement reports contain essential information for determining the location of an MS, there are difficulties involved in using these measurement reports directly. They do not explicitly identify the MS to which they relate, so a mechanism must be provided to determine the IMSI of an MS associated with a measurement report. This can be accomplished by collection of other messages and correlation of their contents. In some networks it may be possible to discover this information from the A-bis links alone, but in general it is necessary to monitor both the A-bis links and the A links. A suitable method of determining the IMSI of an MS is described in US patent 6 119 000.

In order to find the IMSI of a MS that has entered the monitored area but has not yet been paged (e.g. to establish a call to the user of that MS) it may also be necessary to monitor the MAP/G interface between VLRs in different MSCs. Monitoring the MAP/D links 28 (Figure 1) between VLRs and HLRs 30 is necessary if the MS ISDN number (MSISDN) is required as part of the location information.

Signal strength measurements on the cells surrounding the serving cell identify these cells by means of the BSIC and indices into a BCCH Allocation, which lists the beacon frequencies of neighbouring cells whose signal strength is to be measured. A procedure is therefore required for deriving the unique CGI for the neighbouring cells referenced in a measurement report, and this involves monitoring the A-bis and A links 20 and 24. In particular, three steps are needed:
(i) determine the beacon frequency (ARFCN) and BSIC for each serving cell;
(ii) determine the list of neighbour cells for each serving cell along with the ARFCN, BSIC and Cell ID of these neighbour cells;
(iii) determine the BA(SACCH) relating to an active channel.
A suitable method for implementing step (i) is described in US patent 6 181 682. That method monitors handover messages between TRXs to identify the ARFCHs and BSICs of those TRXs. Handovers take place between neighbour cells, so as well as finding the ARFCHs and BSICs of the individual cells, the techniques described in the patent also enable the cells involved in the monitored handovers to be associated as neighbours of each other, as required by step (ii).

Step (iii) involves two parts: determination of the BA(SACCH) of a serving cell, and determination of the BA(SACCH) of a channel if it is given explicitly in a channel specific message (which overrides the BA(SACCH) of the serving cell). To find the BA(SACCH) of the serving cell either of two methods may be used. The first method involves detecting on the A-bis links SACCH FILLING messages (as defined in the GSM standard 08.58 section 8.6.2) that contain embedded System Information Type 5, 5bis or 5ter messages (GSM 04.08 section 9.1.37). These messages contain the default BA(SACCH) for the cell. This method has the advantage of being accurate and reliable, but SACCH FILLING messages are seen infrequently - generally only when the BTS is reconfigured. Thus there could be a long delay before the BA(SACCH) for a cell is obtained, and hence before receive level measurements for MS using that cell can be properly identified. A second method of determining the BA(SACCH) for a cell is described in US patent 6 192 244. This method is statistical in nature and the results it produces can be affected by faulty cells or bad frequency planning. However it typically can provide a BA(SACCH) in cases where an SACCH FILLING message does not occur soon enough, and this information can be confirmed when an SACCH FILLING message is subsequently detected.

The BA(SACCH) of a channel which is given explicitly in a channel specific message (and which thus overrides the BA(SACCH) of the serving cell) is found by looking for System Information Type 5, 5bis or 5ter messages embedded in either A-bis CHANNEL ACTIVATION messages (GSM 08.50 section 8.4.1) or A-bis SACCH INFO MODIFY messages (GSM 08.58 section 8.4.20).

In order to enrich the measurement reports in the ways described above the monitoring system needs some configuration information on the network it is monitoring. This information is primarily the LAI and Cell ID of each TRX in the network (or part of the network) being monitored. These data can be auto-discovered by additional monitoring and correlation of messages on the A-bis and A links, using for example the methods described in US patent 6 088 587.

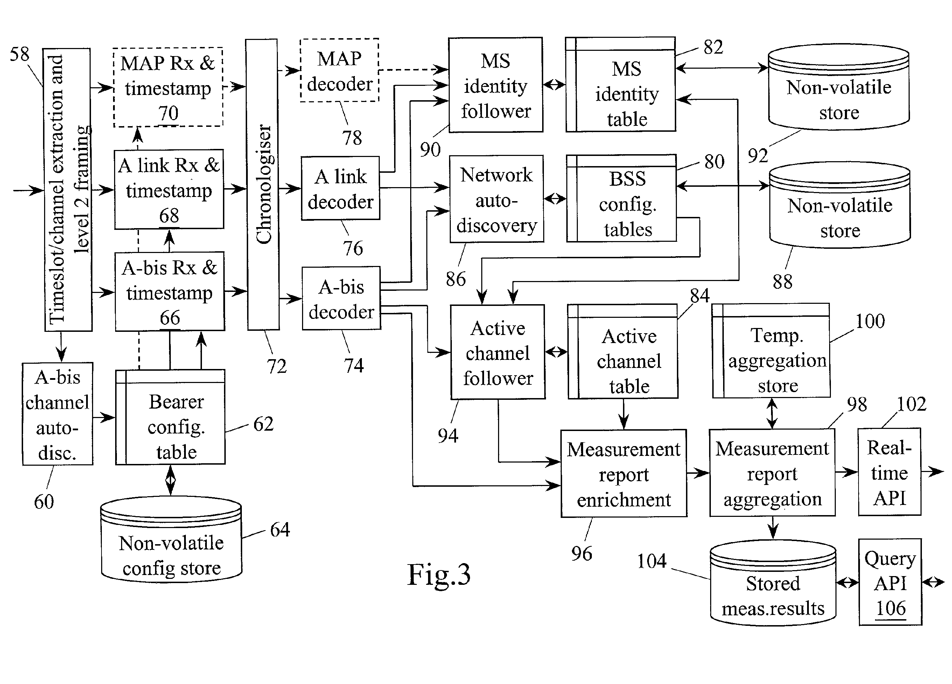

Figure 3 shows the overall architecture of the probes 32 and the monitoring equipment 48 in terms of data flows involved in the processing they perform. Referring to Figure 3, the data streams carried on the A-bis, A and MAP links 20, 24 and 28 are received via for example E1 bearers (physical cables) connected to the probes 32, and data timeslots in those data streams identified and extracted (58). Since A-bis data channels can be allocated dynamically to timeslots and the allocation tends to vary with time (e.g. following a BTS restart), it is preferable to auto-discover the A-bis channel allocation. This is done by an A-bis channel auto-discovery module 60. This module scans through all sub-rates of all timeslots on all bearers looking for valid Link Access Protocol - D channel (LAPD) frames with correct frame check sequences (FCSs). If such a frame is found, an entry is made in a bearer configuration table 62 that this is a likely A-bis channel.

Timeslots and sub-rates are tested only if they are not already present in the bearer configuration table 62 and are not excluded in advance (e.g. because they are known not to carry A-bis traffic, such as timeslot 0 which always carries frame alignment bits). The algorithm for testing each timeslot is depth-first, for example:

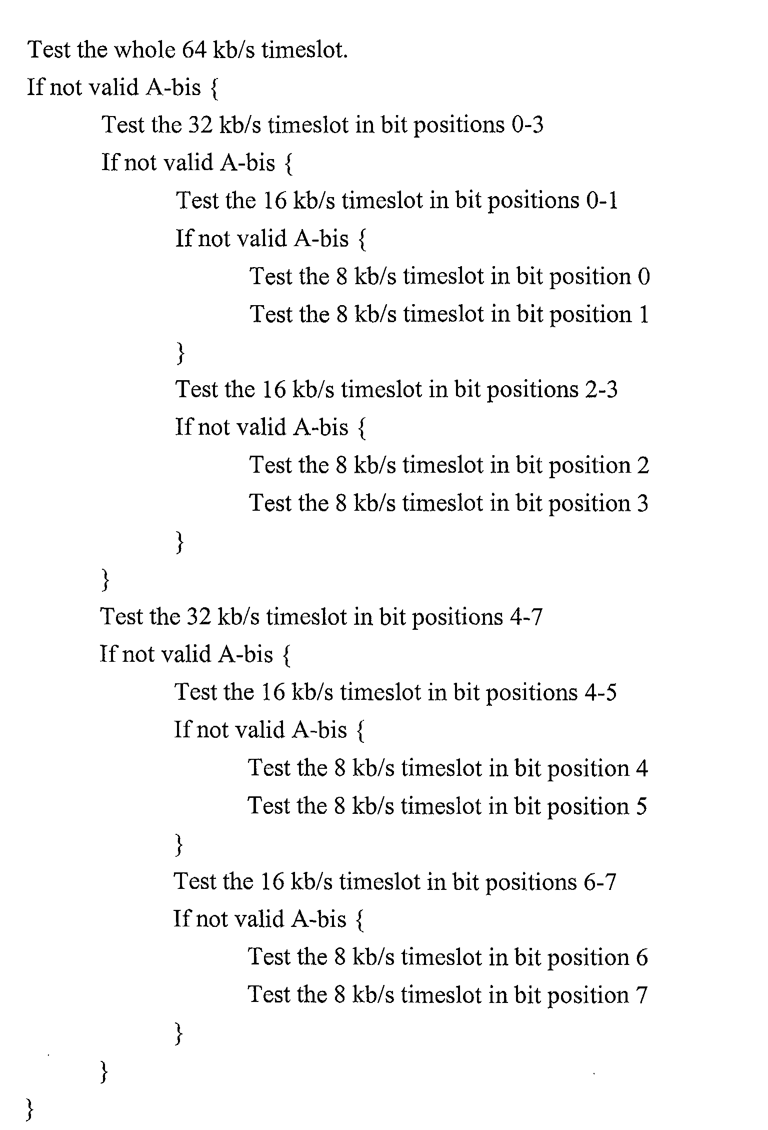

Each test should collect data from the selected time slot for up to a predetermined maximum test time, such as 100 seconds, as follows:
1. If a specified number (e.g. ten) of consecutive good LAPD frames with no FCS error are received then add an entry to the bearer configuration table 62 with the appropriate bearer and timeslot data and the count of good frames received. Enable this bearer, timeslot and sub-rate for delivery of frames for further processing. Advance to the next timeslot or sub-rate to be tested.
2. If the specified number of consecutive bad LAPD frames are received then ignore this timeslot and sub-rate and advance to the next timeslot and sub-rate to be tested.
3. If "good" or "bad" has not been resolved after the maximum test time has elapsed (e.g. nothing is being received or the channel is yielding alternating good and bad frames) then assume this is not a valid A-bis channel and advance to the next timeslot and sub-rate to be tested.

Should a previously discovered A-bis channel disappear (e.g. because it is allocated to a different timeslot), excessive frame check errors will start to occur on that sub-rate, timeslot and bearer. When this happens the A-bis channel entry can be removed from the bearer configuration table 62. The algorithm for this purpose is:
1. On receipt of an invalid frame, decrement the count of good frames received for the relevant bearer and timeslot in the bearer configuration table 62, and discard the frame. If the count is zero after decrementing then disable receipt of further frames from this bearer, timeslot and sub-rate and remove the entry from the table 62.
2. On receipt of a good frame, check the appropriate count of good frames received in the bearer configuration table 62 and increment it if it is currently less than specified number for initially recognising an A-bis timeslot. Unconditionally pass the good frame for further processing - a previous bad frame should not prevent this good frame from being handled.

Referring again to Figure 3, a non-volatile backing store 64 is provided for the bearer configuration table 62, to facilitate fast start-up using previously discovered A-bis channel information.

A-links and MAP links are not as liable to re-allocation as A-bis links and may therefore be manually configured in the bearer configuration table 62.

Signalling frames are collected from the A-bis, A and, optionally, MAP link timeslots, according to the bearer configuration data in the bearer configuration table 62, by respective receivers 66, 68 and 70. These receivers are responsible for time stamping the frames immediately on receipt, rejecting invalid and unwanted frames (e.g. link status and fill-in signal units) and suppressing retransmitted frames before feeding into a 'chronologiser' 72. The chronologiser 72 is responsible for time-ordering the messages received from all the various links in accordance with the time stamps, which is required because subsequent message matching and state following relies on a stream of signalling units in the correct time order.

After time ordering, the various messages are decoded according to their protocol by respective decoders 74, 76 and 78, to separate out the required data fields. To support the enrichment of measurement reports three sets of reference data are populated and maintained: a set of BSS configuration tables 80, an MS identity table 82 and an active channel table 84.

The BSS configuration tables 80 provide BTS TRX and cell configuration details for the monitored network, including the neighbouring cell lists for each cell. These tables are maintained by a network auto-discovery module 86 which receives selected messages from the A-bis and A links and implements the methods described in US patents 6 088 587 and 6 181 682. In addition System Information Type 5 messages are used to determine the BA(SACCH) of the serving cell. A non-volatile store 88 is provided to back up the discovered BSS configuration information during system restarts and thereby enable faster restoration of operation of the monitoring system after a restart.

The MS identity table 82 records MS as they appear in the monitored part of the network and stores the TMSI to IMSI mapping for each MS. This table is maintained by an MS identity follower module 90 which receives selected messages collected from the A-bis, A and, optionally, MAP links, and implements the procedures described in US patent 6 119 000. If required for inclusion in enriched measurement reports the MS identity table 82 also records the MSISDN for each IMSI (see below). As with the BSS configuration data, a non-volatile store 92 is provided for the MS identity data. However this only backs up the MSISDN/IMSI mappings as IMSI/TMSI mappings are likely to be altered following a shutdown.

To correlate MSISDN and IMSI values, the MS identity follower module 90 examines SS7 Transaction Capabilities Application Part (TCAP) BEGIN messages containing MAP_UPDATE_LOCATION invoke operations, sent to the HLR 31 over the MAP links 28, and TCAP CONTINUE messages sent by the HLR 31 in response and containing MAP_INSERT_SUBSCRIBER_DATA invoke operations (some of which in turn contain MSISDN values). These message are associated by the MS identity follower module 90 by matching the signalling point address (point code and/or SCCP global title) and transaction ID values which they contain to identify the TCAP transaction to which they belong. When a pair of associated TCAP BEGIN and TCAP CONTINUE messages have been found, the IMSI in the MAP_UPDATE_LOCATION invoke operation is extracted and used to find the related entry in the MS identity table 82. This entry is updated with the MSISDN value extracted from the MAP_INSERT_SUBSCRIBER_DATA invoke operation in the TCAP CONTINUE message.

The active channel table 84 associates an active air interface channel with the identity of the MS using that channel to provide the enrichment data for the measurement reports. It is populated by an active channel follower module 94 from CHANNEL ACTIVATION, ESTABLISH INDICATION and RF CHANNEL RELEASE messages on the A-bis links, plus reference data from the BSS configuration tables 80 and MS identity table 82.

There are seven possible scenarios for activating a channel, which the active channel follower 94 must detect. These are:
(a) Connection management (CM) service request, for a mobile originated (MO) call, MO SMS, supplementary service, etc.;
(b) Location update or IMSI attach;
(c) IMSI detach;
(d) Response to paging, for a mobile terminated (MT) call, MT SMS, etc.;
(e) CM re-establishment request;
(f) Notification response (used by voice group call service and voice broadcasting service);
(g) Channel reassignment;
(h) Handover.

All channel activations start with a CHANNEL ACTIVATION message on the A-bis link to the required TEI and channel number. The CHANNEL ACTIVATION message contains the initial TA for the MS. When the MS has connected to the activated channel an ESTABLISH INDICATION message is received via the A-bis link. For scenarios (a) through (f) above the ESTABLISH INDICATION message contains an identification of the MS such as IMSI, current TMSI, or old TMSI and LAI.

For scenarios (g) and (h) there is no indication of the MS in the ESTABLISH INDICATION message; this has to be found by tracing back to the previous channel activation on another channel (and at another TRX in the case of a handover). This may be done by linking an ASSIGNMENT COMMAND message or HANDOVER COMMAND message on the old channel with an ASSIGNMENT COMPLETE / HANDOVER COMPLETE message to the new channel using the ciphering key Kc and target channel number to ensure a correct matching. The key Kc is that present in the original ENCRYPTION COMMAND or CHANNEL ACTIVATION message on the old channel and that present in the CHANNEL ACTIVATION command on the new channel, both of which are saved in respective entries in the active channel table 84. Other methods of tracking an MS identity across a handover are described in US patent 5 884 175.

A measurement report enrichment module 96 takes as input raw DTAP MEASUREMENT REPORT messages from the A-bis links and enriches these with the enrichment data from the active channel table 84. In addition, ESTABLISH INDICATION messages are used to generate emulated measurement reports at the beginning of a channel activation, as described below.

Enriched measurement reports contain the following data (* indicates items which may be omitted, depending on the requirements of the mobile location algorithms using the enriched measurement reports):
(a) Timestamp of the measurement report collected from the network;
(b) *IMSI of the MS (if discovered);
(c) *Current TMSI of the MS (if used);
(d) *MSISDN. (This requires the monitoring of the MAP/D interface between VLR and HLR);
(e) *Key. A unique identifier, such as the ciphering key Kc, that may be used to distinguish different MSs in the cases where the IMSI has not yet been determined or is not required;
(f) *CGI of the current serving cell;
(g) *Beacon frequency of the current serving cell;
(h) *BSIC ("colour code") of the current serving cell;
(i) * TEI of the TRX within the current cell;
(j) TA in use by the MS, converted to microseconds to facilitate averaging during measurement result aggregation;
(k) *TRX transmit power level reduction, converted to dBm to facilitate averaging;
(l) *TRX receive level, converted to dBm;
(m)*MS transmit power level, converted to dBm;
(n) *MS receive level of the current serving cell's signal, converted to dBm;
(o) *Receive level of the beacon frequency of neighbouring cell(s) as measured by the MS. Each level measurement is converted to dBm and, where possible, identified by one or more of:
   i. BSIC and index into the serving cell BA(BCCH) for the neighbouring cell;
   ii. BSIC and ARFCN of the neighbouring cell;
   iii. CGI of the neighbouring cell.

An MS dialogue (e.g. a Location Update) may not have sufficient duration to generate any measurement report messages. Therefore the monitoring system generates an initial emulated enriched measurement report containing items (a) to (j) above, upon occurrence of the following events (the initial TA is available from a CHANNEL ACTIVATION message on the A-bis links):
- CM service request (for Mobile Originated call, MO SMS, SS, etc.) - at channel establishment;
- Location update or IMSI attach - at TMSI Reallocation or Location Updating Accept;
- IMSI detach - at channel establishment;
- Response to Paging (for a Mobile Terminated call, MT SMS, etc.) - at channel establishment;
- CM re-establishment request - at channel establishment;
- Notification Response (used by VGCS and VBS) - at channel establishment.

An emulated enriched measurement report is also generated immediately following a successful hand-over or reassignment to a different TRX. This emulated report contains the new TRX, Cell Id and TA value.

A measurement report aggregation module 98 collects the measurement reports for each active MS and averages them over an aggregation period (using a temporary aggregation store 100 for intermediate results to produce AMRs as described above. At the end of each aggregation period for an MS the AMR may be provided via a real time link 102 (accessed for example through a defined application programming interface - API) and/or stored in a database 104. The aggregation periods for each MS start with the first measurement result for that MS; generation of AMRs for different MSs is totally independent and asynchronous. A query/response API 106 is provided to extract AMRs from the database 104.

The invention provides several advantages compared to prior methods of determining the location of mobile communications devices. For example, location data on a large number of mobile devices can be obtained in real time, and without imposing additional burden on the communications network itself. Storage of these location data in turn enables historical patterns of mobile location to be determined and investigated.

In the embodiment described above both the A-bis and A links 20 and 24 are monitored. However, monitoring the A links can be omitted if the procedures for calculating MS location from the measurement reports are able to use BSIC and BCCH ARFCN instead of Cell ID, and if the IMSI of a MS is always transmitted over the A-bis links for every initial channel activation. Likewise, monitoring of the MAP links 28 is only necessary if location data identified by reference to IMSI is required and it is not acceptable to wait for an MS to be paged before discovering its IMSI, or if the MSISDN of a MS is required in a measurement report in addition to the IMSI.

## Claims

1. A method of providing data for enabling location of a mobile communications device to be determined, by monitoring messages traversing a signalling link for co-ordinating operation of the device with a communications network, comprising the steps of:
monitoring at least one signalling link carrying messages between two elements of the communications network;
selecting messages of a first type carrying reports of measurements relating to propagation of signals between the device and the network;
extracting reports of measurements from the messages of the first type, independently of operation of said two elements of the network;
selecting messages of a second type carrying data other than reports of such measurements;
extracting information from the messages of the second type; and
combining measurement reports extracted from the messages of the first type with the information extracted from the messages of the second type to provide data for enabling the location of the mobile communications device to be determined.

2. The method of claim 1, wherein the information extracted from the messages of the second type relates to at least one of identity of the mobile communications device, identity of a section of the communications network within which the device is located, and identity of sections of the network adjacent to the section within which the device is located.

3. The method of claim 1 or claim 2, wherein the reports of measurements extracted from the messages of the first type relate to at least one of received signal strength, quality of signal reception and timing of occurrence of wireless signal bursts.

4. The method of any one of the preceding claims, wherein the communications network is a GSM network and the signalling link is any one of an A link, an A-bis link or a MAP link.

5. The method of claim 4, wherein the messages of the second type include messages specifying wireless signal frequencies for which measurements of the first type are to be made.

6. The method of any one of the preceding claims, wherein the messages of the second type include messages enabling recognition of the identity of the mobile communications device to be maintained across a handover.

7. The method of any one of the preceding claims, wherein the messages of the second type include messages enabling IMSI and MSISDN identifications of the mobile communications device to be correlated.

8. The method of claim 7, wherein the messages of the second type are messages that relate to a logical transaction and that contain MAP_UPDATE_LOCATION invoke operations and MAP_INSERT_SUBSCRIBER_DATA invoke operations, and these messages are correlated by means of signalling point address and transaction ID values.

9. Apparatus for providing data for enabling location of a mobile communications device to be determined, by monitoring messages traversing a signalling link for co-ordinating operation of the device with a communications network, comprising:
monitoring means for monitoring at least one signalling link carrying messages between two elements of the communications network;
first selection means for selecting messages of a first type carrying reports of measurements relating to propagation of signals between the device and the network;
first extraction means for extracting reports of measurements from the messages of the first type, independently of operation of said two elements of the network;
second selection means selecting messages of a second type carrying data other than reports of such measurements;
second extraction means extracting information from the messages of the second type; and
combining means for combining measurement reports extracted from the messages of the first type with the information extracted from the messages of the second type to provide data for enabling the location of the mobile communications device to be determined.
